# EUROPÄISCHE PATENTSCHRIFT

(11) **EP 1 920 189 B1**
(45) Veröffentlichungstag und Bekanntmachung des Hinweises auf die Patenterteilung: **24.07.2013**
(21) Anmeldenummer: 06776662.6
(22) Anmeldetag: 08.08.2006
(51) Int. Cl.: F21V 5/00, B60Q 1/02, B60Q 1/00, F21S 8/12

(54) **FAHRZEUGSCHEINWERFER**
VEHICLE HEADLAMP
PHARE DE VEHICULE

(30) Priorität: 01.09.2005 DE 102005041682
(43) Veröffentlichungstag der Anmeldung: 14.05.2008
(73) Patentinhaber: DOCTER OPTICS GMBH, 07806 Neustadt an der Orla (DE)
(72) Erfinder: FISCHER, Jens, 07907 Schleiz (DE); HOLTZ, Steffen, 07745 Jena (DE)
(74) Vertreter: Kiriczi, Sven Bernhard
(86) Internationale Anmeldenummer: PCT/EP2006/007820
(87) Internationale Veröffentlichungsnummer: WO 2007/025637

(56) Entgegenhaltungen:
- EP-A2- 1 008 801
- WO-A2-02/33449
- DE-A1- 4 203 253
- DE-A1- 10 342 635
- DE-A1- 19 627 936
- DE-A1- 19 814 480

## Beschreibung

Die Erfindung betrifft einen Fahrzeugscheinwerfer, insbesondere einen Kraftfahrzeugscheinwerfer, mit einer ersten Lichtquelle und mit zumindest einer zweiten Lichtquelle.

Die D E 196 27 936 A1 offenbart eine Scheinwerfereinheit mit einem Abblendlichtscheinwerfer und mit einem Fernlichtscheinwerfer. Der Abblendlichtscheinwerfer weist einen Reflektor und eine Lichtquelle auf und durch diesen wird während des Betriebs des Abblendlichtscheinwerfers ein Abblendlichtbündel mit einer oberen Helldunkelgrenze ausgesandt. Der Fernlichtscheinwerfer weist einen Reflektor und eine Lichtquelle zur Erzeugung des Fernlichts auf. In den Reflektor ist zusätzlich eine Lichtquelle für die Erzeugung eines Begrenzungslichts eingesetzt.

Die DE 10 2004 053 303 A1 offenbart einen Fahrzeugscheinwerfer zur Erzeugung eines Lichtstärkeverteilungsmusters für Abblendlicht durch Abstrahlen von Licht von mehreren Leuchtenteileinheiten, von denen jede eine Lichtquelle mit einem Halbleiter-Lichtemissionselement aufweist, wobei zumindest eine der Leuchtenteileinheiten als eine in Vorwärtsrichtung abstrahlende Leuchtenteileinheit ausgestaltet ist, die Licht in Vorwärtsrichtung eines Fahrzeugs schickt, und zumindest eine Leuchtenteileinheit als seitlich abstrahlende Leuchtenteileinheit ausgestaltet ist, die Licht zur Außenseite in Richtung der Breite des Fahrzeugs in einem Winkel relativ zur Vorwärtsrichtung schickt.

Die DE 10 2004 053 320 A1 offenbart einen Fahrzeugscheinwerfer, der einen Hauptleuchtenkörper, eine Basis-Leuchtenteileinheit, die so ausgebildet ist, dass sie Licht zur Ausbildung eines Lichtintensitätsverteilungsmusters für Abblendlicht abstrahlt, und eine zusätzliche Leuchtenteileinheit aufweist, die so ausgebildet ist, dass sie dadurch Licht zur Ausbildung eines zusätzlichen Lichtintensitätsverteilungsmusters abstrahlt, dass sie zeitweilig in den Hauptleuchtenkörper leuchtet, wobei eine Lichtquellenlampe als Lichtquelle der Basis-Leuchtenteileinheit eingesetzt wird, und ein Halbleiter-Lichtemissionselement als Lichtquelle der zusätzlichen Leuchtenteileinheit eingesetzt wird.

Weitere Fahrzeugscheinwerfer sind in der DE 10 2004 060 840 A1, in der DE 10 2004 061 873 A1, in der DE 198 14 480 A1, in der DE 100 27 981 A1, in der DE 195 39 422 C2 und in der DE 10 2004 062 286 A1 offenbart.

Die DE 198 14 480 A1 offenbart einen Scheinwerfer für Fahrzeuge nach dem Projektionsprinzip mit einem Reflektor, einer Lichtquelle, einer Linse, durch die von der Lichtquelle ausgesandtes und durch den Reflektor reflektiertes Licht hindurchtritt, und mit wenigstens einem die Linse zumindest auf einem Teil ihres Umfangs umgebenden, wenigstens teilweise lichtdurchlässigen Element, das wenigstens bereichsweise optische Profile aufweist und durch das von der Lichtquelle ausgesandtes, vom Reflektor nicht erfassbares Licht hindurchtritt und gesammelt wird, wobei das vom Reflektor reflektierte und durch die Linse hindurchgetretene Licht eine obere Helldunkelgrenze aufweist, und wobei der Scheinwerfer wenigstens eine zusätzliche Lichtquelle zur Erzeugung eines Begrenzungslichts aufweist, die derart angeordnet ist, dass von dieser ausgesandtes Licht zumindest teilweise durch das Element hindurchtritt.

Die DE 100 27 981 A1 offenbart einen Scheinwerfer mit integriertem Standlicht, der ein Gehäuse, mindestens eine Lichtquelle und eine Lichtscheibe als Abschluss des Scheinwerfers nach außen umfasst, wobei die Lichtscheibe in mehrere Segmente unterteilt ist, wobei mindestens ein Segment gegenüber der Lichtquelle für die Standlichtfunktion angeordnet ist und das eine Segment gegenüber der Lichtquelle für die Standlichtfunktion eine integrierte Optik aufweist.

Eine in der DE 103 61 303 A1 offenbarte Fahrzeugleuchte weist ein erstes Leuchtmittel für eine erste Lichtfunktion, einen Reflektor zum Bündeln des von einer Abstrahlstelle des ersten Leuchtmittels abgestrahlten Lichts, mindestens ein dem ersten Leuchtmittel vorgelagertes zweites Leuchtmittel für eine zweite Lichtfunktion und einen zwischen dem ersten Leuchtmittel und dem zweiten Leuchtmittel angeordneten Rückreflektor auf. Der Reflektor hat eine erste Prismenfläche und zweite Prismenfläche aufweisende erste Prismenstruktur. Die ersten Prismenflächen sind dabei zum Umlenken des von der Abstrahlstelle direkt auf sie auftreffenden Lichts zu der Lichtscheibe angeordnet.

Es ist Aufgabe der Erfindung, einen verbesserten Fahrzeugscheinwerfer anzugeben. Es ist eine weitere Aufgabe der Erfindung, die Kosten für die Herstellung von Fahrzeugscheinwerfern zu senken.

Vorgenannte Aufgabe wird durch einen Fahrzeugscheinwerfer bzw. Fahrzeugfrontscheinwerfer, insbesondere Kraftfahrzeugscheinwerfer bzw. Kraftfahrzeugfrontscheinwerfer, mit einer ersten Lichtquelle, mit zumindest einer zweiten Lichtquelle und mit einem einstückig ausgestalteten transparenten Formteil gemäß Anspruch 1 gelöst.

Eine Oberfläche hat insbesondere dann eine Ausdehnung von zumindest jeweils einer Mindest-Längsausdehnung in zwei orthogonale Richtungen, wenn die Oberfläche zumindest einen Kreis mit einem der Mindest-Längsausdehnung entsprechenden Durchmesser umfasst bzw. vollständig überdeckt. Eine erste optische Struktur im Sinne der Erfindung ist insbesondere eine Licht bündelnde Struktur. Eine stetige Oberfläche im Sinne der Erfindung ist insbesondere eine stetig ableitbare Oberfläche. Eine stetige Oberfläche im Sinne der Erfindung besitzt innerhalb der vorgenannten Mindestausdehnung insbesondere keine Sprünge.

In weiterhin vorteilhafter Ausgestaltung der Erfindung bildet die erste Lichtquelle in Verbindung mit der ersten optischen Struktur, sowie ggf. weiteren Elementen, wie z.B. einem Reflektor, ein Abblendlicht, ein Fernlicht und/oder ein Nebellicht.

In einer Ausgestaltung der Erfindung richtet die erste Lichtquelle in Verbindung mit der ersten optischen Struktur Licht in eine andere Richtung als die zweite Lichtquelle in Verbindung mit der zweiten optischen Struktur

In weiterhin vorteilhafter Ausgestaltung der Erfindung umfasst die erste Lichtquelle eine Lampe, insbesondere eine Gasentladungslampe oder eine Glühlampe, oder ist als eine Lampe, insbesondere eine Gasentladungslampe oder eine Glühlampe, ausgestaltet. Die erste Lichtquelle kann z.B. eine Halogenlampe oder eine Xenonleuchte sein. Geeignete Ausgestaltungen für die erste Lichtquelle können z.B. den Seiten 739 bis 753 des Buches "Bosch, Kraftfahrtechnisches Taschenbuch", 23. Auflage, Vieweg, 1999, ISBN 3-528-03876-4 entnommen werden. Es kann aber auch vorgesehen sein, dass die erste Lichtquelle eine LED bzw. eine Anordnung von LEDs ist. In diesem Falle ist die LED bzw. die Anordnung von LEDs insbesondere derart ausgestaltet, dass mittels ihr ein Abblendlicht, ein Fernlicht und/oder ein Nebellicht implementierbar ist.

In weiterhin vorteilhafter Ausgestaltung der Erfindung ist die zweite Lichtquelle ein Halbleiter-Lichtemissionselement, insbesondere eine LED bzw. Leuchtdiode, oder umfasst ein Halbleiter-Lichtemissionselement, insbesondere eine LED bzw. Leuchtdiode. Die Verwendung von LEDs für Signalleuchten für Kraftfahrzeuge ist z.B. in der DE 102 07 431 A1, der DE 102 37 263 A1 und der DE 195 07 234 B4 offenbart.

In weiterhin vorteilhafter Ausgestaltung der Erfindung umfasst der Fahrzeugscheinwerfer zumindest eine dritte Lichtquelle, wobei das Formteil zumindest eine dritte optische Struktur zur Ausrichtung von von der dritten Lichtquelle abgestrahltem Licht aufweist. In weiterhin vorteilhafter Ausgestaltung der Erfindung ist die dritte Lichtquelle ein Halbleiter-Lichtemissionselement, insbesondere eine LED bzw. Leuchtdiode, oder umfasst ein Halbleiter-Lichtemissionselement, insbesondere eine LED bzw. Leuchtdiode.

In weiterhin vorteilhafter Ausgestaltung der Erfindung ist die erste, die zweite und/oder die dritte optische Struktur und/oder eine weitere optische Struktur blankgepresst. In weiterhin vorteilhafter Ausgestaltung der Erfindung ist das Formteil, insbesondere beidseitig, blankgepresst. Unter Blankpressen soll im Sinne der Erfindung insbesondere derartiges Pressen einer Linse verstanden werden, dass eine Nachbearbeitung einer optisch wirksamen Oberfläche der Linse nach dem Pressen entfallen kann.

In weiterhin vorteilhafter Ausgestaltung der Erfindung ist die erste optische Struktur als Linse bzw. als Teil einer Linse ausgestaltet. In weiterhin vorteilhafter Ausgestaltung der Erfindung ist die erste optische Struktur als Projektionslinse bzw. als Teil einer Projektionslinse ausgestaltet. In weiterhin vorteilhafter Ausgestaltung der Erfindung ist die erste optische Struktur als Sammellinse bzw. als Teil einer Sammellinse ausgestaltet. In weiterhin vorteilhafter Ausgestaltung der Erfindung ist eine der ersten Lichtquelle abgewandte optisch wirksame Oberfläche der ersten optischen Struktur konvex bzw. asphärisch ausgestaltet.

In weiterhin vorteilhafter Ausgestaltung der Erfindung umfasst der Fahrzeugscheinwerfer eine Blende, wobei eine Kante der Blende mittels der ersten optischen Struktur als eine Hell-Dunkel-Grenze abbildbar ist.

In weiterhin vorteilhafter Ausgestaltung der Erfindung besteht das transparente Formteil im wesentlichen aus Glas oder umfasst das transparente Formteil Glas.

In weiterhin vorteilhafter Ausgestaltung der Erfindung bildet das transparente Formteil ein Außenteil des Fahrzeugscheinwerfers. Das heißt insbesondere, dass in vorteilhafter Ausgestaltung der Erfindung keine zusätzliche Außenscheibe, wie etwa die in der DE 10 2004 061 873 A1 mit Bezugszeichen 30 bezeichnete transparente Abdeckung, vorgesehen ist.

In einer vorteilhaften Ausgestaltung kann vorgesehen sein, dass eine optische Struktur zu einem wesentlichen Teil oder (nahezu) eine Rauhigkeit von weniger als 0,05 µm, insbesondere bei einer Lichttransmission an der Oberfläche von mindestens 90%, aufweist. Jedoch können Teilbereiche, insbesondere der ersten optischen Struktur, eine größere Rauhigkeit aufweisen. Derartige Teilbereiche mit größerer Rauhigkeit sind insbesondere entsprechend der DE 10 2004 011 084 ausgestaltet. Rauhigkeit im Sinne der Erfindung soll insbesondere als Rₐ, insbesondere nach ISO 4287, definiert sein.

In einer weiteren Ausgestaltung kann vorgesehen sein, dass insbesondere auf einer der (ersten) Lichtquelle zugewandten Fläche des transparenten Formteils, ein Emblem eingeprägt ist. Dieses Emblem ist vorteilhafterweise auf der der ersten Lichtquelle zugewandten Fläche des transparenten Formteils angeordnet. Vorgenanntes Emblem ist vorteilhafterweise entsprechend einem in der DE 10 2004 011 104 offenbarten Emblem ausgestaltet.

Das Emblem umfasst in vorteilhafter Ausgestaltung eine Grundfläche, die gegenüber der der (ersten) Lichtquelle zugewandten Fläche des transparenten Formteils oder gegenüber einer optischen Achse des transparenten Formteils (bzw. z.B. der ersten optischen Struktur) derart geneigt ist, dass durch eine der (ersten) Lichtquelle abgewandte Fläche entlang der bzw. parallel zur optischen Achse des transparenten Formteils (bzw. z.B. der ersten optischen Struktur) in das transparente Formteil eindringendes Licht an der Grundfläche einer Totalreflexion unterliegt. Das Emblem umfasst in vorteilhafter Ausgestaltung eine Grundfläche, die gegenüber der der (ersten) Lichtquelle zugewandten Fläche des transparenten Formteils um einen Winkel zwischen 25° und 80°, insbesondere zwischen 35° und 60°, oder gegenüber einer optischen Achse des transparenten Formteils (bzw. z.B. der ersten optischen Struktur) um einen Winkel zwischen 10° und 65°, insbesondere zwischen 30° und 55°, geneigt ist.

Es kann vorgesehen sein, dass auf der der ersten Lichtquelle zugewandten Oberfläche der ersten optischen Struktur oder auf der der Lichtquelle zugewandten Oberfläche des transparenten Formteils im Bereich der ersten optischen Struktur eine, insbesondere blankgepresste, Verformung oder Prägung zur Ablenkung eines Teils des von der ersten Lichtquelle erzeugbaren Lichts in einen Nebenleuchtbereich außerhalb eines Hauptleuchtbereichs der ersten Lichtquelle in Verbindung mit der ersten optischen Struktur umfasst. Die Verformung oder Prägung kann entsprechend einer in der DE 10 2004 024 107 offenbarten Verformung oder Prägung ausgestaltet sein. Alternativ oder zusätzlich kann mittels einer weiteren (z.B. der zweiten) Lichtquelle in Verbindung mit einer weiteren (z.B. der zweiten) optischen Struktur Licht in diesen Nebenleuchtbereich gelenkt werden. In vorteilhafter Ausgestaltung entfallen auf den Hauptleuchtbereich zumindest 95%, insbesondere zumindest 97%, des aus der der ersten optischen Struktur austretbaren bzw. austretenden Lichts. In weiterer Ausgestaltung entfallen auf den Nebenleuchtbereich weniger als 5%, insbesondere weniger als 3%, des aus der ersten optischen Struktur austretbaren bzw. austretenden Lichts jedoch vorteilhafterweise zumindest 0,2%, insbesondere zumindest 0,5%, des aus der ersten optischen Struktur austretbaren bzw. austretenden Lichts. Mittels des Nebenleuchtbereichs können z.B. Verkehrsschilder ausgeleuchtet bzw. angeleuchtet werden. Hauptleuchtbereich und Nebenleuchtbereich sind als getrennt anzusehen, wenn zwischen ihnen ein unbeleuchteter Bereich liegt. In diesem unbeleuchteten Bereich ist die Lichtintensität nahezu null oder vernachlässigbar klein.

Erfindungsgemaß tritt durch die erste optische Struktur im Wesentlichen kein Licht der zweiten Lichtquelle und durch die zweite optische Struktur im Wesentlichen kein Licht der ersten Lichtquelle hindurch.

In einer weiterhin vorteilhaften Ausgestaltung umfasst die stetig gekrümmte oder stetige, gekrümmte Oberfläche der ersten optischen Struktur eine Ausdehnung von zumindest zwei Zentimetern, insbesondere von zumindest vier Zentimetern, in zwei orthogonale Richtungen. In einer weiterhin vorteilhaften Ausgestaltung umfassen die stetig gekrümmte oder stetige, gekrümmte Oberfläche der ersten optischen Struktur und die stetig gekrümmte oder stetige, gekrümmte Oberfläche der zweiten optischen Struktur jeweils eine Ausdehnung von zumindest zwei Zentimetern, insbesondere von zumindest vier Zentimetern, in zwei orthogonale Richtungen.

Vorgenannte Aufgabe wird zudem durch ein Kraftfahrzeug mit einem eines oder mehrere der vorgenannten Merkmale umfassenden Fahrzeugscheinwerfer bzw. Fahrzeugfrontscheinwerfer gelöst. In vorteilhafter Ausgestaltung der Erfindung ist dabei die Hell-Dunkel-Grenze auf eine Fahrbahn, auf der das Kraftfahrzeug anordbar ist, abbildbar.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Kraftfahrzeug,
- Fig. 2: eine schematische Darstellung eines Ausführungsbeispiels eines Fahrzeugscheinwerfers in einem Querschnitt,
- Fig. 3: eine schematische Darstellung des Fahrzeugscheinwerfers gemäß Fig. 2 in einer Draufsicht,
- Fig. 4: ein Ausführungsbeispiel eines transparenten Formteils,
- Fig. 5: eine zweidimensionale Intensitätsverteilung von mittels des Fahrzeugscheinwerfers gemäß Fig. 2 abgestrahlten Lichts,
- Fig. 6: ein weiteres Ausführungsbeispiel eines transparenten Formteils,
- Fig. 7: eine Seitenansicht des transparenten Formteils gemäß Fig. 6,
- Fig. 8: ein weiteres Ausführungsbeispiel eines transparenten Formteils,
- Fig. 9: eine Seitenansicht des transparenten Formteils gemäß Fig. 8,
- Fig. 10: ein weiteres Ausführungsbeispiel eines transparenten Formteils,
- Fig. 11: eine Seitenansicht des transparenten Formteils gemäß Fig. 10,
- Fig. 12: einen Querschnitt durch ein weiteres Ausführungsbeispiel eines transparenten Formteils in einer Prinzipdarstellung,
- Fig. 13: einen Querschnitt durch ein weiteres Ausführungsbeispiel eines transparenten Formteils in einer Prinzipdarstellung,
- Fig. 14: einen Querschnitt durch ein weiteres Ausführungsbeispiel eines transparenten Formteils in einer Prinzipdarstellung,
- Fig. 15: ein weiteres Ausführungsbeispiel eines transparenten Formteils in einer perspektivischen Darstellung,
- Fig. 16: eine Draufsicht auf das transparente Formteil gemäß Fig. 15,
- Fig. 17: eine Seitenansicht des transparenten Formteils gemäß Fig. 15,
- Fig. 18: ein weiteres Ausführungsbeispiel eines transparenten Formteils in einer perspektivischen Darstellung,
- Fig. 19: eine Draufsicht auf das transparente Formteil gemäß Fig. 18,
- Fig. 20: eine Seitenansicht des transparenten Formteils gemäß Fig. 18 und
- Fig. 21: eine Sicht hinter das transparente Formteil gemäß Fig. 18.

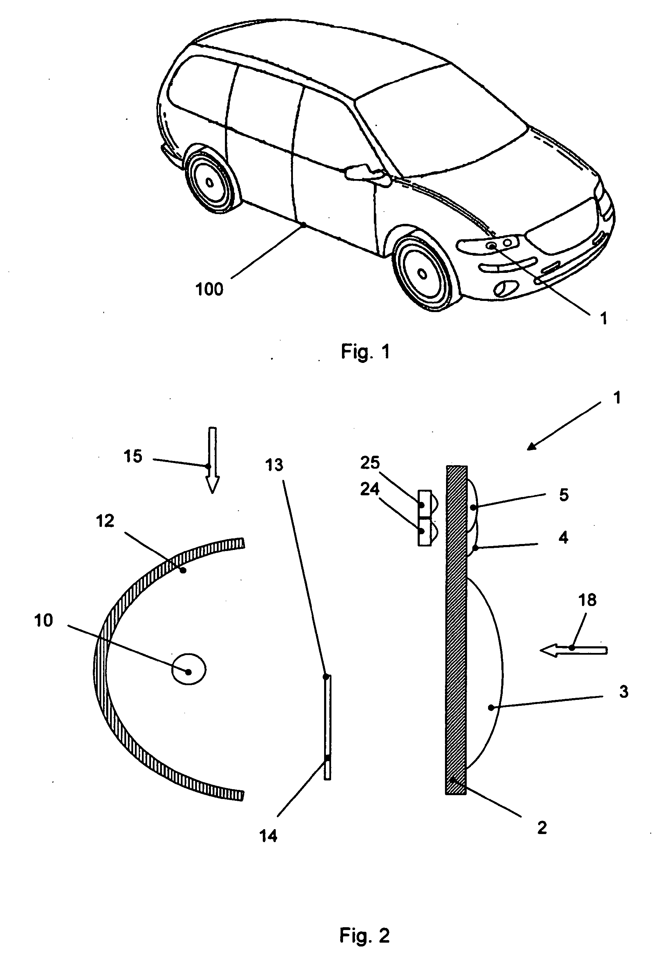

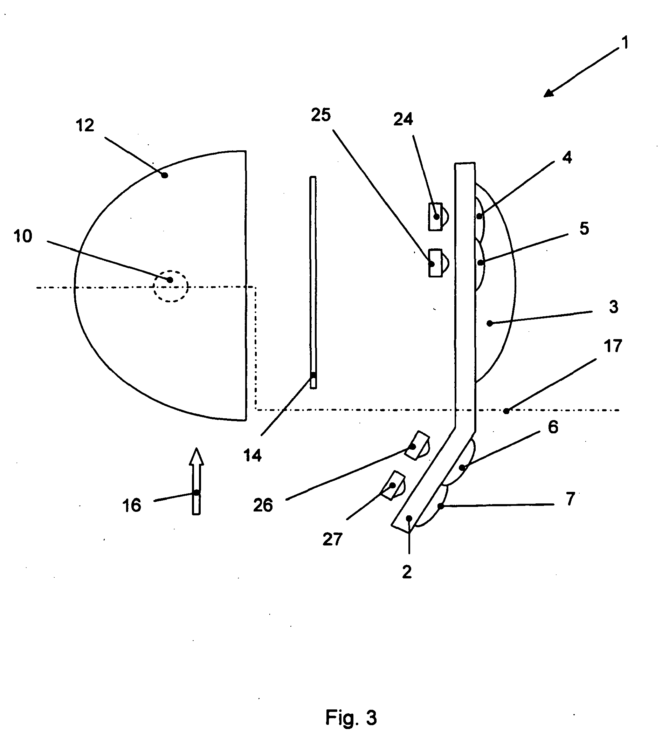

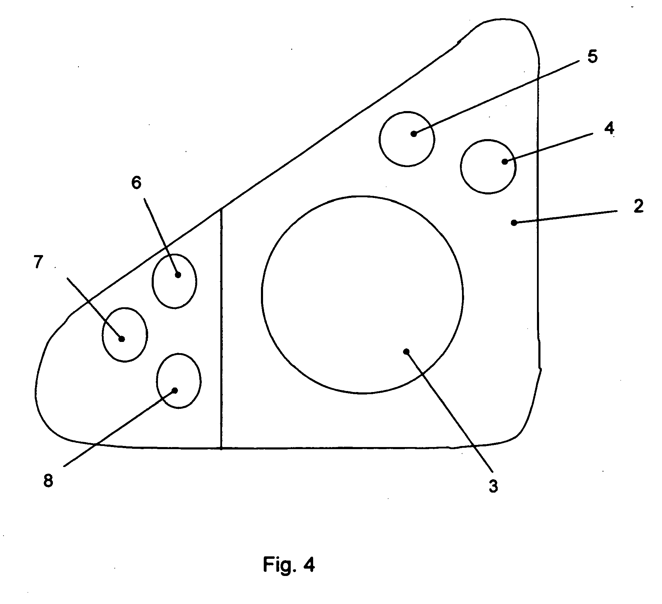

Fig. 1 zeigt ein Kraftfahrzeug 100 mit einem in Fig. 2 schematisch in einem Querschnitt entlang einer in Fig.3 mit Bezugszeichen 17 bezeichneten Schnittlinie dargestellten Fahrzeugscheinwerfer 1 (Frontscheinwerfer). Dabei zeigt Fig. 2 den Fahrzeugscheinwerfer 1 aus einer in Fig. 3 mit Bezugszeichen 16 bezeichneten Blickrichtung. Fig. 3 zeigt eine schematische Darstellung des Fahrzeugscheinwerfers 1 aus einer in Fig.2 mit Bezugszeichen 15 bezeichneten Blickrichtung. Der Fahrzeugscheinwerfer 1 umfasst ein einstückiges, insbesondere beidseitig, blankgepresstes transparentes Formteil 2. Fig. 4 zeigt das transparente Formteil 2 aus einer in Fig. 2 mit Bezugszeichen 18 bezeichneten Blickrichtung.

Der Fahrzeugscheinwerfer 1 umfasst zudem eine Lichtquelle 10 zum Erzeugen von Licht, einen Reflektor 12 zum Reflektieren von mittels der Lichtquelle 10 erzeugbarem Licht und eine Blende 14. Die Lichtquelle 10 ist ein Ausführungsbeispiel für eine erste Lichtquelle im Sinne der Ansprüche. Die Lichtquelle 10 umfasst vorteilhafterweise eine Lampe, insbesondere eine Gasentladungslampe oder eine Glühlampe, oder ist als eine Lampe, insbesondere eine Gasentladungslampe oder eine Glühlampe, ausgestaltet. Die erste Lichtquelle kann z.B. eine Halogenlampe oder eine Xenonleuchte sein. Geeignete Ausgestaltungen für die erste Lichtquelle können z.B. den Seiten 739 bis 753 des Buches "Bosch, Kraftfahrtechnisches Taschenbuch", 23. Auflage, Vieweg, 1999, ISBN 3-528-03876-4 entnommen werden.

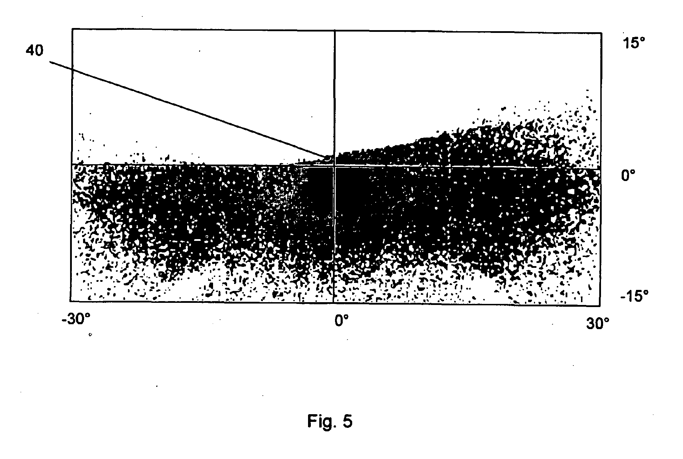

Das transparente Formteil 2 umfasst eine optische Struktur 3 zur Ausrichtung von von der Lichtquelle 10 abgestrahltem Licht. Die der Lichtquelle 10 abgewandte optisch wirksame Oberfläche der optischen Struktur 3 ist dabei derart konvex bzw. asphärisch ausgestaltet, dass eine in Fig. 2 mit Bezugszeichen 13 bezeichnete Kante der Blende 14 - wie in Fig. 5 dargestellt - mittels der optischen Struktur 3 als eine Hell-Dunkel-Grenze 40 abbildbar ist: Dabei zeigt Fig. 5 eine zweidimensionale Intensitätsverteilung von mittels des Fahrzeugscheinwerfers 1 abgestrahlten Lichts, wobei Bereiche sehr geringer bzw. keiner Lichtintensität weiss, Bereiche mittlerer Lichtintensität schwarz und Bereiche hoher Lichtintensität grau dargestellt sind. Die optische Struktur 3 ist ein Ausführungsbeispiel für eine erste optische Struktur im Sinne der Ansprüche.

Im dargestellten Fahrzeugscheinwerfer 1 ist mittels der Lichtquelle 10 in Verbindung mit der optischen Struktur 3 ein Abblendlicht implementiert. Mittels der Lichtquelle 10 können in Verbindung mit der optischen Struktur 3 auch ein Fernlicht oder ein Nebellicht implementiert werden.

Das transparente Formteil 2 umfasst zudem eine optische Struktur 4 zur Ausrichtung von von einer Lichtquelle 24 abgestrahltem Licht, eine optische Struktur 5 zur Ausrichtung von von einer Lichtquelle 25 abgestrahltem Licht, eine optische Struktur 6 zur Ausrichtung von von einer Lichtquelle 26 abgestrahltem Licht, eine optische Struktur 7 zur Ausrichtung von von einer Lichtquelle 27 abgestrahltem Licht und eine optische Struktur 8 zur Ausrichtung von von einer nicht dargestellten Lichtquelle abgestrahltem Licht. Die Lichtquellen 24, 25, 26 und 27 sowie die mit der optischen Struktur 8 zusammenwirkende Lichtquelle sind Ausführungsbeispiel für eine zweite oder dritte Lichtquelle im Sinne der Ansprüche. Die optischen Strukturen 4, 5, 6, 7 und 8 sind Ausführungsbeispiele für eine zweite oder dritte optische Struktur im Sinne der Ansprüche. Die Lichtquellen 24, 25, 26 und 27 sowie die mit der optischen Struktur 8 zusammenwirkende Lichtquelle sind als Halbleiter-Lichtemissionselemente, insbesondere LEDs bzw. Leuchtdioden, ausgestaltet.

Mittels der Lichtquellen 24, 25, 26 und 27 sowie der mit der optischen Struktur 8 zusammenwirkenden Lichtquelle können in Verbindung mit den optischen Strukturen 4, 5, 6, 7 und/oder 8 ein statisches Kurvenlicht, ein Nebellicht, ein Teil eines Nebellichtes, ein Teil eines Abblendlichtes, ein City-Licht oder Tagfahrlicht, ein Signal-Licht, eine Lichthupe, ein Infrarotscheinwerfer und/oder ein Blinker implementiert werden. Zur Implementierung eines Infrarotscheinwerfers ist z.B. eine (oder mehrere) der Lichtquellen 24, 25, 26 und 27 als Infrarotlicht emittierende Diode ausgestaltet. Mittels der Lichtquellen 24, 25, 26 und 27 sowie der mit der optischen Struktur 8 zusammenwirkenden Lichtquelle kann in Verbindung mit den optischen Strukturen 4, 5, 6, 7 und/oder 8 auch ein spezielles Corporate Design implementiert werden.

In vorteilhafter Ausgestaltung umfasst der Fahrzeugscheinwerfer 1 keine zusätzliche Außenscheibe. Vielmehr bildet das transparente Formteil 2 ein Außenteil des Fahrzeugscheinwerfers 1.

Es kann vorgesehen sein, dass auf der der Lichtquelle 10 zugewandten Oberfläche der optischen Struktur 3 oder auf der der Lichtquelle 10 zugewandten Oberfläche des transparenten Formteils 2 im Bereich der optischen Struktur 3 eine Verformung oder Prägung zur Ablenkung eines Teils des von der ersten Lichtquelle 10 erzeugbaren Lichts in einen Nebenleuchtbereich außerhalb eines mittels der Lichtquelle 10 in Verbindung mit der optischen Struktur 3 erzeugten Hauptleuchtbereichs umfasst. Alternativ oder zusätzlich kann mittels der Lichtquelle 5 in Verbindung mit der optischen Struktur 25 Licht in vorgenannten Nebenleuchtbereich gelenkt werden. In vorteilhafter Ausgestaltung entfallen auf den Hauptleuchtbereich zumindest 95%, insbesondere zumindest 97%, des aus der ersten optischen Struktur austretbaren bzw. austretenden Lichts. In weiterer Ausgestaltung entfallen auf den Nebenleuchtbereich weniger als 5%, insbesondere weniger als 3%, des aus der ersten optischen Struktur austretbaren bzw. austretenden Lichts jedoch vorteilhafterweise zumindest 0,2%, insbesondere zumindest 0,5%, des aus der ersten optischen Struktur austretbaren bzw. austretenden Lichts. Mittels des Nebenleuchtbereichs können z.B. Verkehrsschilder ausgeleuchtet bzw. angeleuchtet werden. Hauptleuchtbereich und Nebenleuchtbereich sind als getrennt anzusehen, wenn zwischen ihnen ein unbeleuchteter Bereich liegt. In diesem unbeleuchteten Bereich ist die Lichtintensität nahezu null oder vernachlässigbar klein.

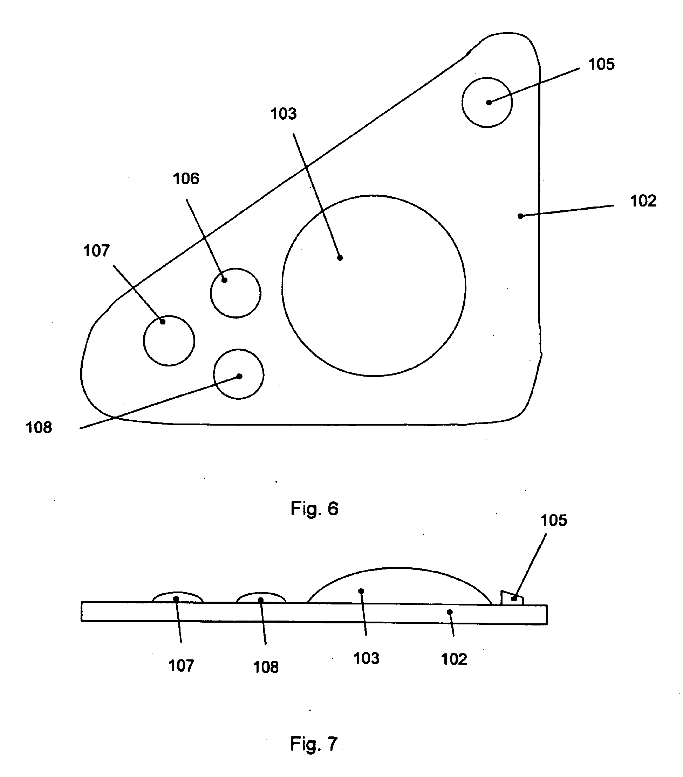

Fig. 6 und Fig. 7 zeigen ein weiteres Ausführungsbeispiel eines einstückig blankgepressten transparenten Formteils 102, wobei Fig. 7 das transparente Formteil 102 in einer Seitenansicht zeigt. Das transparente Formteil 102 umfasst eine der optischen Struktur 3 entsprechende optische Struktur 103. Das transparente Formteil 102 umfasst zudem z. B. eine oder mehrere der optischen Strukturen 4, 5, 6, 7 und 8 entsprechende optische Strukturen 105, 106, 107 und 108.

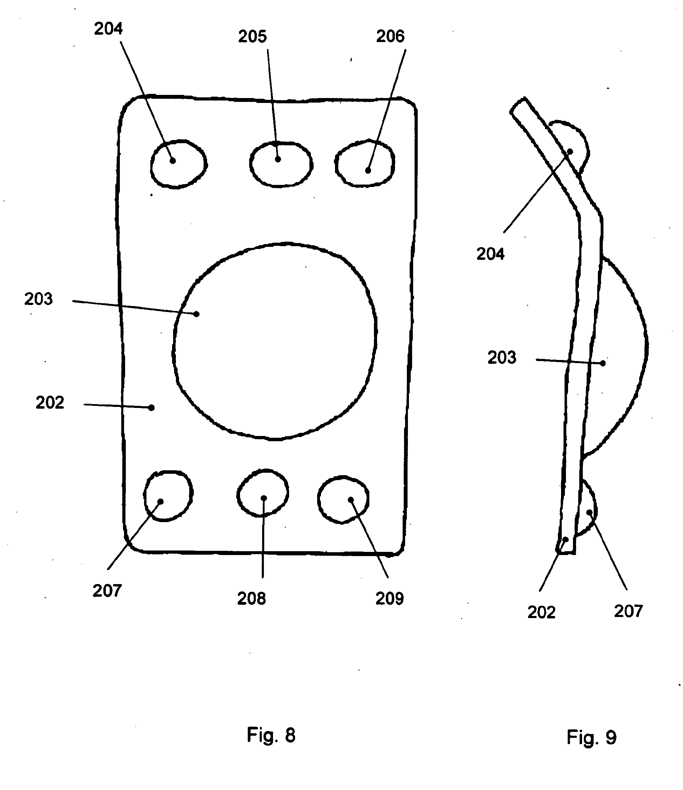

Fig. 8 und Fig. 9 zeigen ein weiteres Ausführungsbeispiel eines einstückig blankgepressten transparenten Formteils 202, wobei Fig. 9 das transparente Formteil 202 in einer Seitenansicht zeigt. Das transparente Formteil 202 umfasst eine der optischen Struktur 3 entsprechende optische Struktur 203. Das transparente Formteil 202 umfasst zudem z. B. eine oder mehrere der optischen Strukturen 4, 5, 6, 7 und 8 entsprechende optische Strukturen 204, 205, 206, 207, 208 und 209.

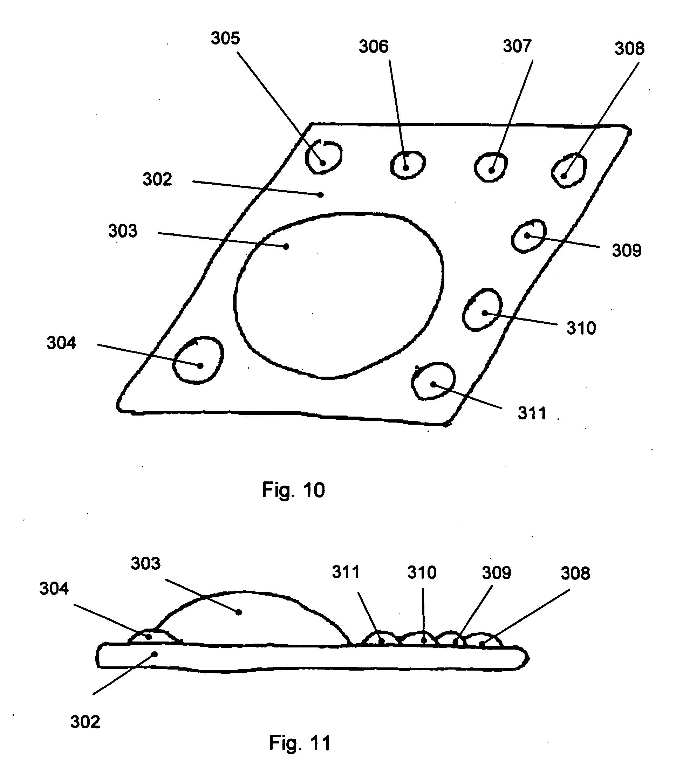

Fig. 10 und Fig. 11 zeigen ein weiteres Ausführungsbeispiel eines einstückig blankgepressten transparenten Formteils 302, wobei Fig. 7 das transparente Formteil 302 in einer Seitenansicht zeigt. Das transparente Formteil 302 umfasst eine der optischen Struktur 3 entsprechende optische Struktur 303. Das transparente Formteil 302 umfasst zudem z. B. einer oder mehrerer der optischen Strukturen 4, 5, 6, 7 und 8 entsprechende optische Strukturen 304, 305, 306, 307, 308, 309, 310 und 311.

Die transparenten Formteile 2, 102, 202 und 302 umfassen in den dargestellten Ausführungsbeispielen nur jeweils eine einer optischen Struktur zur Implementierung eines Nebellichts, eines Abblendlichts oder eines Fernlichts entsprechenden optischen Struktur 3, 103, 203 bzw. 303. Es können jedoch auch zwei oder mehr dieser optischen Strukturen auf einem transparenten Formteil 2, 102, 202 und 302 vorgesehen werden.

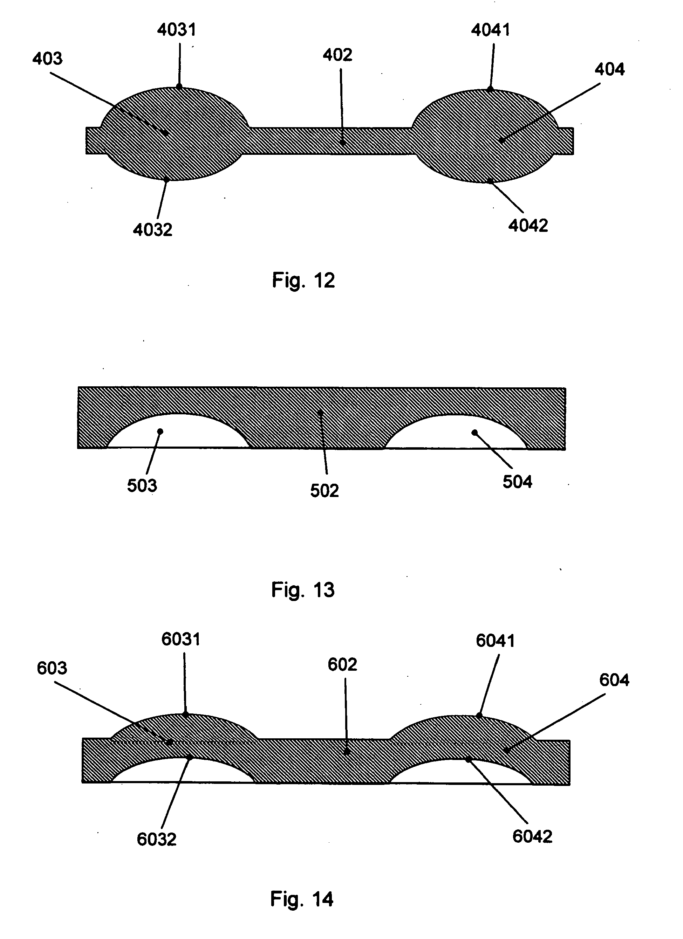

Fig. 12 zeigt einen Querschnitt durch ein weiteres Ausführungsbeispiel eines transparenten Formteils 402 in einer Prinzipdarstellung. Das transparente Formteil 402 umfasst zwei optische Strukturen 403 und 404, von denen zumindest eine in einer Ausgestaltung in Bezug auf ihre Funktion der optischen Struktur 3 entspricht. Die optische Struktur 403 umfasst auf ihrer einer Lichtquelle abgewandten Seite sowie auf ihrer einer Lichtquelle zugewandten Seite eine konvexe, insbesondere asphärische, Krümmung 4031 bzw. 4032. Die optische Struktur 404 umfasst ebenfalls auf ihrer einer Lichtquelle abgewandten Seite sowie auf ihrer einer Lichtquelle zugewandten Seite eine konvexe, insbesondere asphärische, Krümmung 4041 bzw. 4042.

Fig. 13 zeigt einen Querschnitt durch ein weiteres Ausführungsbeispiel eines transparenten Formteils 502 in einer Prinzipdarstellung. Das transparente Formteil 502 umfasst auf seiner Lichtquellen zugewandten Seite zwei als konkave Vertiefungen ausgestaltete optische Strukturen 503 und 504.

Fig. 14 zeigt einen Querschnitt durch ein weiteres Ausführungsbeispiel eines transparenten Formteils 602 in einer Prinzipdarstellung. Das transparente Formteil 602 umfasst zwei optische Strukturen 603 und 604, von denen zumindest eine in einer Ausgestaltung in Bezug auf ihre Funktion der optischen Struktur 3 entspricht. Die optische Struktur 603 umfasst auf ihrer einer Lichtquelle abgewandten Seite eine konvexe, insbesondere asphärische, Krümmung 6031 und auf ihrer einer Lichtquelle zugewandten Seite eine konkave, Krümmung 6032. Die Krümmungen 6031 und 6032 sind derart aufeinander abgestimmt, dass die optische Struktur 603 eine Sammellinse ist. Die optische Struktur 604 umfasst auf ihrer einer Lichtquelle abgewandten Seite eine konvexe, insbesondere asphärische, Krümmung 6041 und auf ihrer einer Lichtquelle zugewandten Seite eine konkave, Krümmung 6042.. Die Krümmungen 6041 und 6042 sind derart aufeinander abgestimmt, dass die optische Struktur 604 ebenfalls eine Sammellinse ist. Die optischen Strukturen 403, 404, 503, 504, 603 und 604 können auch gemischt in einem transparenten Formteil verwendet werden.

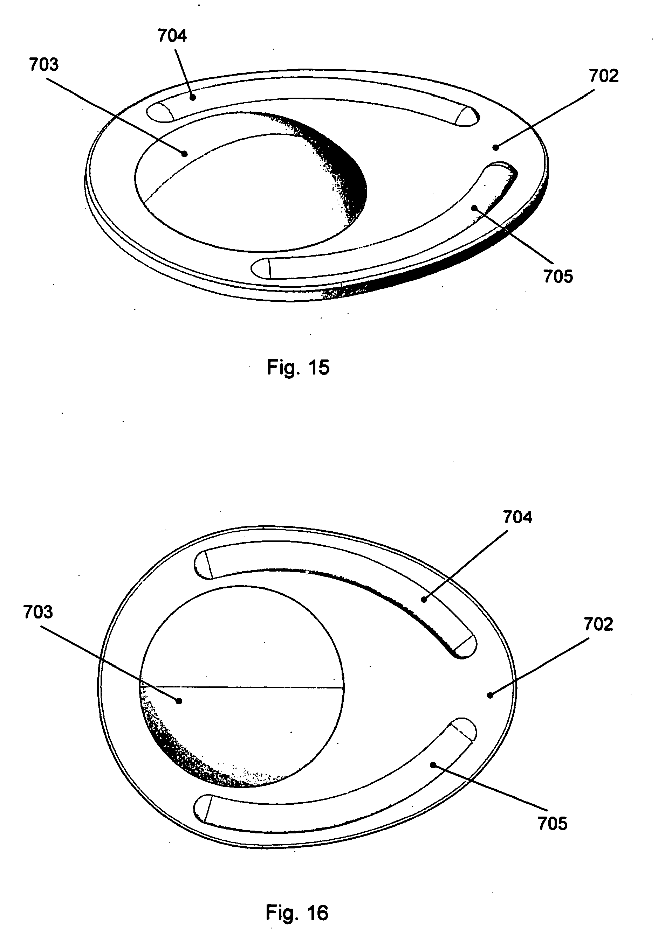

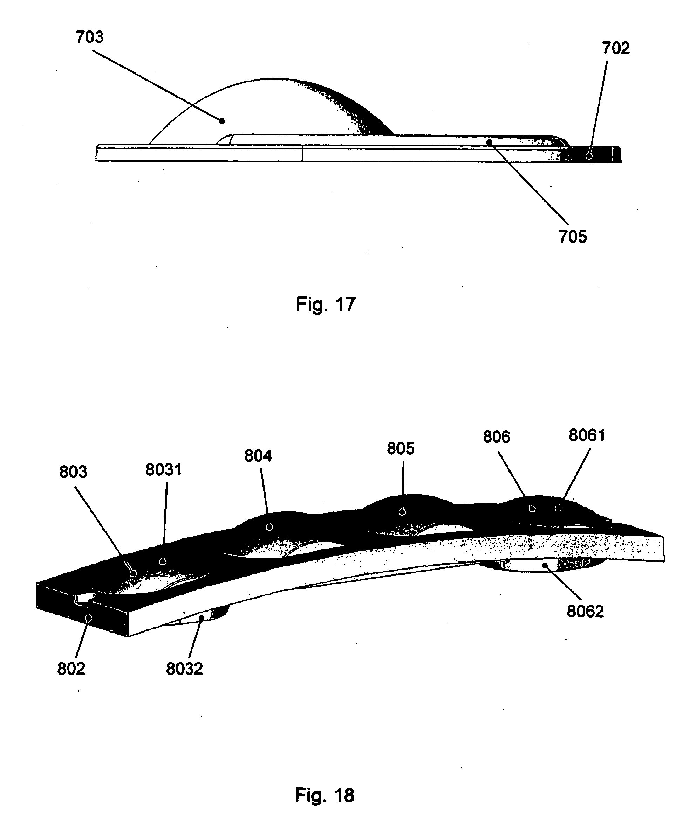

Fig. 15 zeigt ein weiteres Ausführungsbeispiel eines transparenten Formteils 702 in einer perspektivischen Darstellung, Fig. 16 zeigt eine Draufsicht auf das transparente Formteil 702, und Fig. 17 zeigt eine Seitenansicht des transparenten Formteils 702. Das transparente Formteil 702 umfasst eine der optischen Struktur 3 entsprechende optische Struktur 703. Das transparente Formteil 702 umfasst zudem zwei - in Bezug auf ihre Funktion - z. B. einer oder mehrerer der optischen Strukturen 4, 5, 6, 7 und 8 entsprechende optische Strukturen 704 und 705.

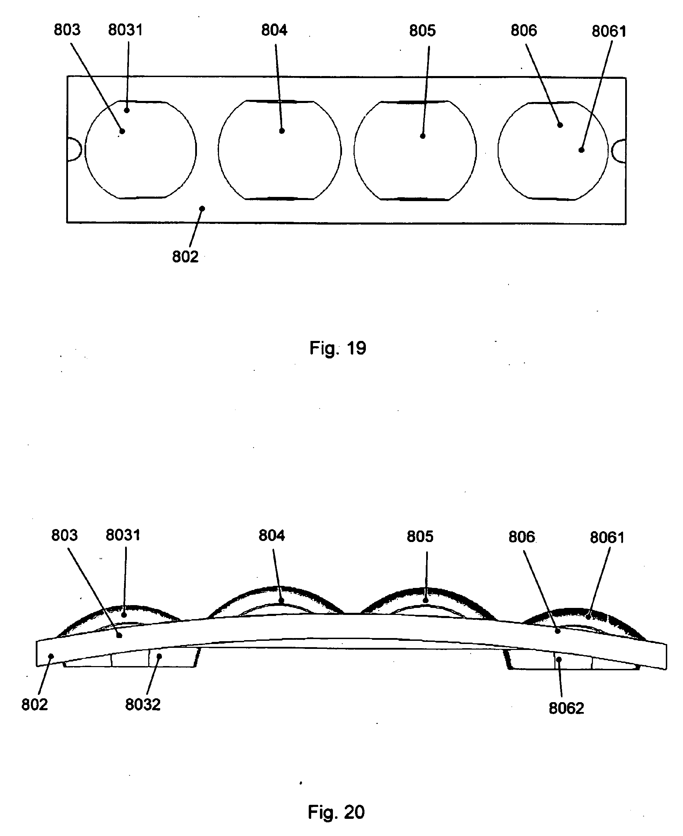

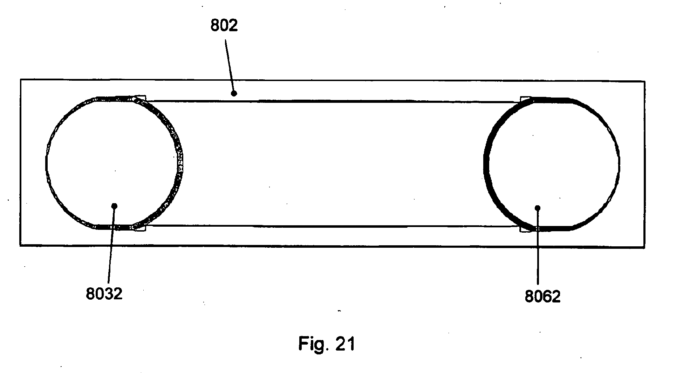

Fig. 18 zeigt ein weiteres Ausführungsbeispiel eines gekrümmten transparenten Formteils 802 in einer perspektivischen Darstellung, Fig. 19 zeigt eine Draufsicht auf das transparente Formteil 802, Fig. 20 zeigt eine Seitenansicht des transparenten Formteils 802, und Fig. 21 zeigt eine Sicht hinter das transparente Formteil 802. Das transparente Formteil 802 umfasst zwei optische Strukturen 804 und 805, von denen zumindest eine in einer Ausgestaltung der optischen Struktur 3 entspricht. Darüber hinaus umfasst das transparente Formteil 802 zwei mit Bezugszeichen 803 und 806 bezeichnete optische Strukturen. Die optische Struktur 803 umfasst auf ihrer einer Lichtquelle abgewandten Seite eine konvexe, insbesondere asphärische, optische Teilstruktur 8031 und auf ihrer einer Lichtquelle zugewandten Seite eine zylindrische optische Teilstruktur 8032. Die optische Struktur 806 umfasst auf ihrer einer Lichtquelle abgewandten Seite eine konvexe, insbesondere asphärische, optische Teilstruktur 8061 und auf ihrer einer Lichtquelle zugewandten Seite eine zylindrische optische Teilstruktur 8062.

In vorteilhafter Ausgestaltung bestehen die transparenten Formteile 2, 102, 202 302, 402 502, 602, 702 und 802 im Wesentlichen aus Glas oder umfassen die transparenten Formteile 2, 102, 202, 302, 402, 502, 602, 702 und 802 Glas. Die transparenten Formteile 2, 102, 202 302, 402 502, 602, 702 und 802 können jedoch auch im Wesentlichen aus transparentem Kunststoff bestehen oder transparenten Kunststoff umfassen.

Die Elemente und Abstände in den Figuren 1 bis 14 sind unter Berücksichtigung von Einfachheit und Klarheit und nicht notwendigerweise maßstabsgetreu gezeichnet. So sind z.B. die Größenordnungen einiger Elemente bzw. Abstände in den Figuren 1 bis 14 übertrieben gegenüber anderen Elementen bzw. Abständen dargestellt, um das Verständnis der Ausführungsbeispiele der vorliegenden Erfindung zu verbessern.

## Patentansprüche

1. Fahrzeugscheinwerfer (1), insbesondere Kraftfahrzeugscheinwerfer (1), mit einer ersten Lichtquelle (10), mit zumindest einer zweiten Lichtquelle (24) und mit einem einstückig ausgestalteten transparenten Formteil (2), wobei das Formteil (2) eine erste optische Struktur (3) zur Ausrichtung von von der ersten Lichtquelle (10) abgestrahltem Licht und zumindest eine zweite optische Struktur (4) zur Ausrichtung von von der zweiten Lichtquelle (24) abgestrahltem Licht umfasst, so dass durch die erste optische Struktur (3) im Wesentlichen kein Licht der zweiten Lichtquelle (24) und durch die zweite optische Struktur (4) im Wesentlichen kein Licht der ersten Lichtquelle (10) hindurchtritt, und wobei die erste optische Struktur (3) und die zweite optische Struktur (4) jeweils eine stetig gekrümmte Oberfläche oder eine stetige und gekrümmte Oberfläche mit einer Ausdehnung von zumindest jeweils einem halben, insbesondere einem, Zentimeter in zwei orthogonale Richtungen umfassen.

2. Fahrzeugscheinwerfer (1) nach Anspruch 1, **dadurch gekennzeichnet, dass** die erste Lichtquelle (10) eine Lampe, insbesondere eine Gasentladungslampe oder eine Glühlampe, umfasst oder als eine Lampe, insbesondere eine Gasentladungslampe oder eine Glühlampe, ausgestaltet ist.

3. Fahrzeugscheinwerfer (1) nach Anspruch 1 oder 2, **dadurch gekennzeichnet, dass** die erste Lichtquelle (10) in Verbindung mit der ersten optischen Struktur (3) ein Abblendlicht, ein Fernlicht oder ein Nebellicht bildet.

4. Fahrzeugscheinwerfer (1) nach Anspruch 1, 2 oder 3, **dadurch gekennzeichnet, dass** die zweite Lichtquelle (24) ein Halbleiter-Lichtemissionselement, insbesondere eine LED, ist oder ein Halbleiter-Lichtemissionselement, insbesondere eine LED, umfasst.

5. Fahrzeugscheinwerfer (1) nach einem der vorhergehenden Ansprüche, **dadurch gekennzeichnet, dass** der Fahrzeugscheinwerfer (1) zumindest eine dritte Lichtquelle (3) umfasst und dass das Formteil (2) zumindest eine dritte optische Struktur (5) zur Ausrichtung von von der dritten Lichtquelle (25) abgestrahltem Licht aufweist.

6. Fahrzeugscheinwerfer (1) nach einem der vorhergehenden Ansprüche, **dadurch gekennzeichnet, dass** die erste optische Struktur (3), die zweite optische Struktur (4) und/oder die dritte optische Struktur (5) und/oder eine weitere optische Struktur (6, 7, 8) blankgepresst ist.

7. Fahrzeugscheinwerfer (1) nach einem der vorhergehenden Ansprüche, **dadurch gekennzeichnet, dass** das Formteil (2), insbesondere beidseitig, blankgepresst ist.

8. Fahrzeugscheinwerfer (1) nach einem der vorhergehenden Ansprüche, **dadurch gekennzeichnet, dass** mittels der ersten optische Struktur (3) eine Hell-Dunkel-Grenze (40) abbildbar ist.

9. Fahrzeugscheinwerfer (1) nach einem der vorhergehenden Ansprüche, **dadurch gekennzeichnet, dass** der Fahrzeugscheinwerfer (1) eine Blende (14) umfasst, wobei eine Kante (13) der Blende (14) mittels der ersten optischen Struktur (3) als eine Hell-Dunkel-Grenze (40) abbildbar ist.

10. Fahrzeugscheinwerfer (1) nach einem der vorhergehenden Ansprüche, **dadurch gekennzeichnet, dass** das transparente Formteil (2) ein Außenteil des Fahrzeugscheinwerfers (1) bildet.

11. Fahrzeugscheinwerfer (1) nach einem der vorhergehenden Ansprüche, **dadurch gekennzeichnet, dass** die erste optische Struktur (3) eine Linse ist.

12. Fahrzeugscheinwerfer (1) nach einem der vorhergehenden Ansprüche, **dadurch gekennzeichnet, dass** die erste optische Struktur (3) eine Projektionslinse ist.

13. Kraftfahrzeug (100), **dadurch gekennzeichnet, dass** es einen Fahrzeugscheinwerfer (1) nach einem der vorhergehenden Ansprüche aufweist.

14. Kraftfahrzeug (100) nach Anspruch 13, **dadurch gekennzeichnet, dass** die Hell-Dunkel-Grenze (40) auf eine Fahrbahn, auf der das Kraftfahrzeug anordbar ist, abbildbar ist.

## Claims

1. Vehicle headlight (1), in particular motor vehicle headlight (1), including a first light source (10), at least one second light source (24), and a monolithicly configured transparent mould piece (2), wherein the mould piece (2) comprises a first optical structure (3) for aligning light emitted from the first light source (10) and at least one second optical structure (4) for aligning light emitted from the second light source (24) such that essentially no light emitted from the second light source (24) passes through the first optical structure (3) and essentially no light emitted from the first light source (10) passes through the second optical structure (4), and wherein each the first optical structure (3) and the second optical structure (4) comprises a continuously curved surface or a continuous and curved surface having an extension of at least half a centimetre, each, in particular of one centimetre, each, in two orthogonal directions.

2. Vehicle headlight (1) as claimed in claim 1, **characterized in that** the first light source (10) comprises a lamp, in particular a gas discharge lamp or an incandescent lamp, or is configured as a lamp, in particular a gas discharge lamp or an incandescent lamp.

3. Vehicle headlight (1) as claimed in claim 1 or claim 2, **characterized in that** the first light source (10), in connection with the first optical structure (3) forms a dipped headlight, a high beam light or a fog lamp.

4. Vehicle headlight (1) as claimed in claim 1, claim 2 or claim 3, **characterized in that** the second light source (24) is a semiconductor light emission element, in particular an LED, or comprises a semiconductor light emission element, in particular an LED.

5. Vehicle headlight (1) as claimed in any one of the preceding claims, **characterized in that** the vehicle headlight (1) comprises at least one third light source (3) and that the mould piece (2) includes at least one third optical structure (5) for aligning light emitted from the third light source (3).

6. Vehicle headlight (1) as claimed in any one of the preceding claims, **characterized in that** the first optical structure (3), the second optical structure (4), and / or the third optical structure (5) and / or any further optical structure (6, 7, 8) is blank - moulded.

7. Vehicle headlight (1) as claimed in any one of the preceding claims, **characterized in that** the mould piece (2) is blank - moulded, in particular on both sides.

8. Vehicle headlight (1) as claimed in any one of the preceding claims, **characterized in that**, by means of the first optical structure (3), a bright - dark - boundary can be imaged.

9. Vehicle headlight (1) as claimed in any one of the preceding claims, **characterized in that** the vehicle headlight (1) comprises a diaphragm (14), wherein an edge (13) of the diaphragm (14) can be imaged by means of the first optical structure (3) as a bright - dark - boundary (40).

10. Vehicle headlight (1) as claimed in any one of the preceding claims, **characterized in that** the transparent mould piece (2) forms an outer part of the vehicle headlight (1).

11. Vehicle headlight (1) as claimed in any one of the preceding claims, **characterized in that** the first optical structure (3) is a lens.

12. Vehicle headlight (1) as claimed in any one of the preceding claims, **characterized in that** the first optical structure (3) is a projection lens.

13. Motor vehicle (100), **characterized in that** it includes a vehicle headlight (1) as claimed in any one of the preceding claims.

14. Motor vehicle (100) as claimed claim 13, **characterized in that** the bright - dark - boundary (40) is capable of being imaged onto a road surface on which the motor vehicle is able to be arranged.

## Revendications

1. Phare de véhicule (1), en particulier un phare de véhicule automobile (1), comprenant une première source lumineuse (10), au moins une seconde source lumineuse (24) et une partie moulée (2) transparente conçue d'un seul tenant, la partie moulée (2) présentant une première structure optique (3) pour orienter une lumière diffusée par la première source lumineuse (10) et au moins une seconde structure optique (4) pour orienter la lumière diffusée par la seconde source lumineuse (24), de telle sorte qu'essentiellement aucune lumière de la seconde source lumineuse (24) ne passe à travers la première structure optique (3) et qu'essentiellement aucune lumière de la première source lumineuse (10) ne passe à travers la seconde structure optique (4), et la première structure optique (3) et la seconde structure optique (4) comprenant respectivement une surface courbée en permanence ou une surface courbée et continue, avec une extension respectivement d'au moins un demi-centimètre, en particulier un centimètre dans deux directions orthogonales.

2. Phare de véhicule (1) selon la revendication 1, **caractérisé par le fait que** la première source lumineuse (10) comprend une lampe, en particulier une lampe à décharge ou une lampe incandescente, ou est conçue sous la forme d'une lampe, en particulier une lampe à décharge ou une lampe incandescente.

3. Phare de véhicule (1) selon la revendication 1 ou 2, **caractérisé par le fait que** la première source lumineuse (10) forme des feux de croisement, des feux de route ou des feux antibrouillard en liaison avec la première structure optique (3).

4. Phare de véhicule (1) selon la revendication 1, 2 ou 3, **caractérisé par le fait que** la seconde source lumineuse (24) est un élément électroluminescent semi-conducteur, en particulier une DEL, ou comprend un élément électroluminescent semi-conducteur, en particulier une DEL.

5. Phare de véhicule (1) selon l'une des revendications précédentes, **caractérisé par le fait que** le phare de véhicule (1) comprend au moins une troisième source lumineuse (25) et que la partie moulée (2) présente au moins une troisième structure optique (5) pour orienter une lumière diffusée par la troisième source lumineuse (25).

6. Phare de véhicule (1) selon l'une des revendications précédentes, **caractérisé par le fait que** la première structure optique (3), la seconde structure optique (4) et/ou la troisième structure optique (5) et/ou une structure optique supplémentaire (6, 7, 8) est comprimée à blanc.

7. Phare de véhicule (1) selon l'une des revendications précédentes, **caractérisé par le fait que** la partie moulée (2) est comprimée à blanc, en particulier sur les deux côtés.

8. Phare de véhicule (1) selon l'une des revendications précédentes, **caractérisé par le fait qu'**une limite clair-obscur (40) peut être représentée au moyen de la première structure optique (3).

9. Phare de véhicule (1) selon l'une des revendications précédentes, **caractérisé par le fait que** le phare de véhicule (1) comprend un cache (14), un bord (13) du cache (14) pouvant former une limite clair-obscur (40) au moyen de la première structure optique (3).

10. Phare de véhicule (1) selon l'une des revendications précédentes, **caractérisé par le fait que** l'élément moulé transparent (2) forme une partie extérieure du phare de véhicule (1).

11. Phare de véhicule (1) selon l'une des revendications précédentes, **caractérisé par le fait que** la première structure optique (3) est une lentille.

12. Phare de véhicule (1) selon l'une des revendications précédentes, **caractérisé par le fait que** la première structure optique (3) est une lentille de projection.

13. Véhicule automobile (100), **caractérisé par le fait qu'**il présente un phare de véhicule automobile (1) selon l'une des revendications précédentes.

14. Véhicule automobile (100) selon la revendication 13, **caractérisé par le fait que** la limite clair-obscur (40) peut être formée sur une chaussée sur laquelle le véhicule automobile peut être positionné.
